# EUROPEAN PATENT APPLICATION

(11) **EP 2 590 070 A1**
(43) Date of publication of application: **08.05.2013**
(21) Application number: 12188572.7
(22) Date of filing: 15.10.2012
(51) Int. Cl.: G06F 9/44

(54) **Delivery system and management method thereof**

(30) Priority: 02.11.2011 JP 2011241524
(71) Applicant: CANON KABUSHIKI KAISHA, Ohta-ku Tokyo 146-8501 (JP)
(72) Inventor: Nakamoto, Hisashi, Ohta-ku, Tokyo (JP)
(74) Representative: Keane, David Colman

(57) **Abstract**

Firmware programs for which batch update is permitted in an image forming apparatus, and configuration information of the firmware programs are registered and managed as a firmware group, and pieces of information of the firmware programs are collected from an image forming apparatus. It is checked whether or not the pieces of collected information of the firmware programs match the managed firmware group. As a result of checking, if they do not match, a managed firmware group, which includes information that matches information of a specific firmware program of the pieces of collected information of the firmware programs, is specified. Then, the pieces of collected information of the firmware programs, which are determined not to match, are registered and managed as a firmware group as a new combination that permits batch update processing.

## Description

### BACKGROUND OF THE INVENTION

### Field of the Invention

The present invention relates to a delivery system which manages and delivers a plurality of firmware versions of an image forming apparatus, and a management method thereof.

### Description of the Related Art

Conventionally, when firmware programs of an image forming apparatus are required to be upgraded or they are required to be updated due to failures or the like, the firmware programs are normally updated by a delivery server via the Internet or using an update tool via USB or an intranet.

When firmware programs are updated by the delivery server, the image forming apparatus notifies the delivery server of configuration information of the firmware programs, and the delivery server decides firmware programs to be delivered based on that information and executes delivery processing. In this case, the delivery server is required to recognize the firmware configuration of the image forming apparatus.

Recently, a technique required to deliver optimal software to a client has been proposed (for example, Japanese Patent Laid-Open No. 2002-268932). According to this technique, in a client/server system, a server manages a master (a database storing source data) which is usable by individual client computers. Upon updating the master, the server computer adds function identification information used to uniquely identify functions which run on each client computer in version information of the master. Then, the server computer compares a master transmission request including version information, which is notified from each client computer, with version information of the master held by itself. Then, the server computer delivers a master of an appropriate version according to the functions of that client computer to the client computer as a request source based on the comparison result.

However, an image forming apparatus corresponds to a group of a plurality of functions, and firmware programs are provided for respective functions and are given with individual versions (a firmware program for each function will be referred to as "function-dependent firmware" or "function-dependent program" hereinafter). In the delivery server which delivers firmware programs to the image forming apparatus, a group of firmware programs as a combination of a plurality of function-dependent firmware programs is registered (this group will be referred to as "firmware group" hereinafter).

For a firmware group to be registered in the delivery server, a version for that group is issued to register the firmware group (this version will be referred to as "firmware group version" hereinafter). Since the firmware group is defined and registered by the delivery server, the image forming apparatus does not have any firmware group information.

The reason why the delivery server manages firmware programs as a group is to safely update the firmware programs of the image forming apparatus. By forming the firmware group, a combination of function-dependent firmware programs is properly maintained.

In order to apply update processing of firmware programs to the image forming apparatus, a client module incorporated in the image forming apparatus notifies the delivery server of information of function-dependent firmware programs in the image forming apparatus.

The delivery server receives the information of the function-dependent firmware programs, and compares that information with a plurality of firmware groups registered in itself.

Then, when a firmware group including function-dependent firmware programs, which match the information of the function-dependent firmware programs received from the image forming apparatus, is found, the delivery server recognizes that group as a firmware group version of the image forming apparatus.

If no matched firmware group is found, the delivery server determines that the information of the image forming apparatus is wrong, and sets a firmware group version of the image forming apparatus as "unknown".

The delivery server permits update processing if it can recognize the firmware group version of the image forming apparatus, but it does not permit the processing if it is "unknown". This is because, if firmware programs are updated for the image forming apparatus in an "unknown" state, the image forming apparatus may malfunction.

In this manner, in order to update firmware programs of the image forming apparatus by the delivery server, the information of the function-dependent firmware programs of the image forming apparatus has to match that of function-dependent firmware programs, which belong to any of firmware groups registered in the delivery server.

However, in order to customize the image forming apparatus, for example, update processing of each individual function-dependent firmware program using an update tool via USB/via the intranet is required to be allowed. However, when the image forming apparatus has been customized, a combination of a plurality of function-dependent firmware programs in the image forming apparatus is different from that of function-dependent firmware programs which belong to a firmware group managed on the delivery server, and the delivery server determines that the firmware group version of the image forming apparatus is in an "unknown" state. That is, when some firmware programs have been changed, it becomes impossible for the delivery server to apply batch update processing of a firmware group including other firmware programs. Once such state is determined, the user has to execute firmware update processing for each function-dependent firmware program, resulting in an inefficient/inconvenient process.

### SUMMARY OF THE INVENTION

The present invention provides a method of allowing to control appropriate delivery processing even when the configuration of a plurality of firmware programs cannot be recognized upon simultaneously delivering a plurality of firmware programs to an image forming apparatus.

The present invention has the following arrangement.

The present invention in its first aspect provides a delivery system as specified in claims 1 to 7.

The present invention in its second aspect provides a delivery method as specified in claims 8 and 9.

The present invention in its third aspect provides a program as specified in claims 10 and 11.

The present invention in its fourth aspect provides a storage medium as specified in claim 12.

According to the present invention, even when a plurality of firmware programs of an image forming apparatus have been individually updated, and it is difficult for a conventional delivery server to execute batch delivery processing, the number of cases in which batch update processing by the delivery server is allowed increases.

Further features of the present invention will become apparent from the following description of exemplary embodiments with reference to the attached drawings.

### BRIEF DESCRIPTION OF THE DRAWINGS

Fig. 1 is a block diagram showing an example of the overall arrangement of a monitoring system according to an embodiment;

Fig. 2 is a block diagram showing an example of the hardware arrangement of a monitoring center host;

Fig. 3 is a block diagram showing an example of the hardware arrangement of a monitoring apparatus;

Fig. 4 is a block diagram showing another hardware arrangement of the monitoring apparatus;

Fig. 5 is a block diagram showing an example of the hardware arrangement in an image forming apparatus;

Fig. 6 is a block diagram showing an example of the software configuration of a part associated with a monitoring system in the monitoring center host and a delivery server;

Fig. 7 is a block diagram showing an example of the software configuration of a part associated with a monitoring system in the monitoring apparatus;

Fig. 8 is a block diagram showing an example of the software configuration of a part associated with a monitoring system in the image forming apparatus;

Fig. 9 is a view showing the structure of a memory map in the monitoring center host, delivery server, monitoring apparatus, or image forming apparatus;

Fig. 10A is a view showing the concept of firmware delivery processing by a delivery system;

Figs. 10B-1 to 10B-3 are views showing the configurations of function-dependent firmware programs registered in image forming apparatuses;

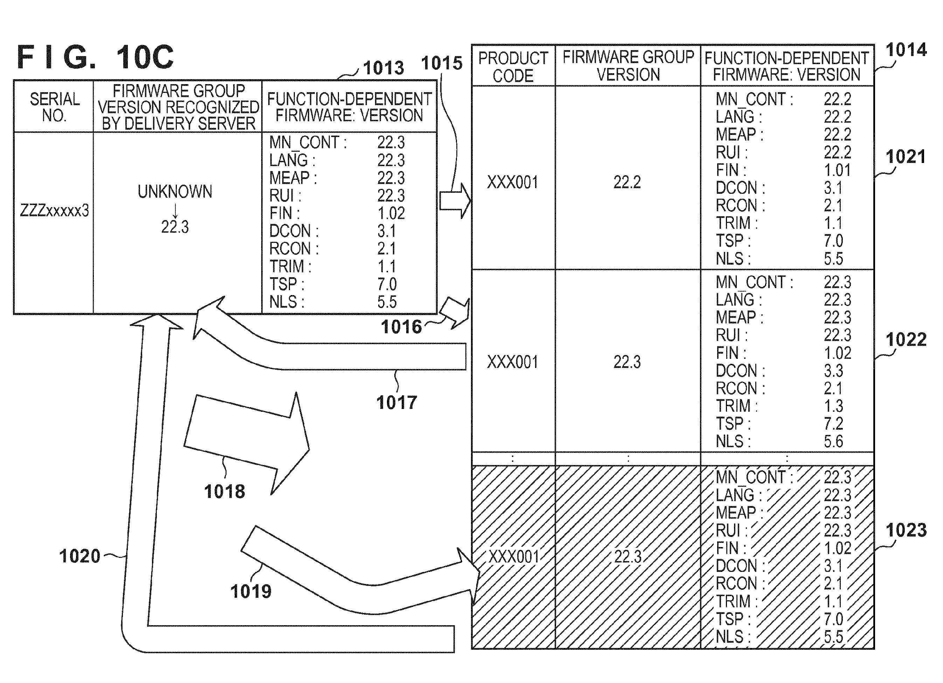

Fig. 10C is a view for explaining execution of "unknown resolution processing";

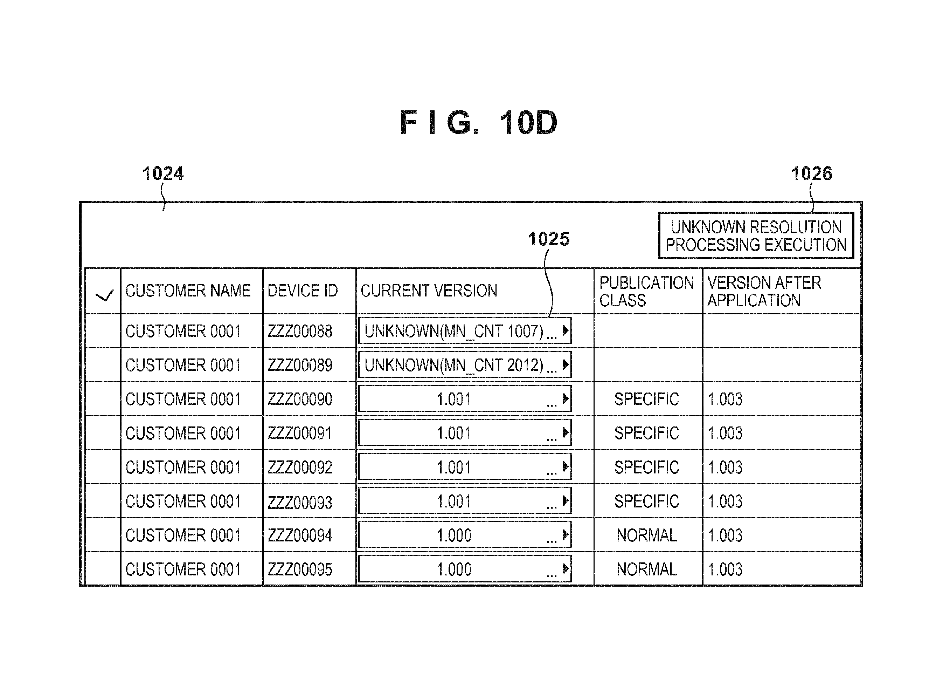

Fig. 10D shows a screen required to execute the "unknown resolution processing";

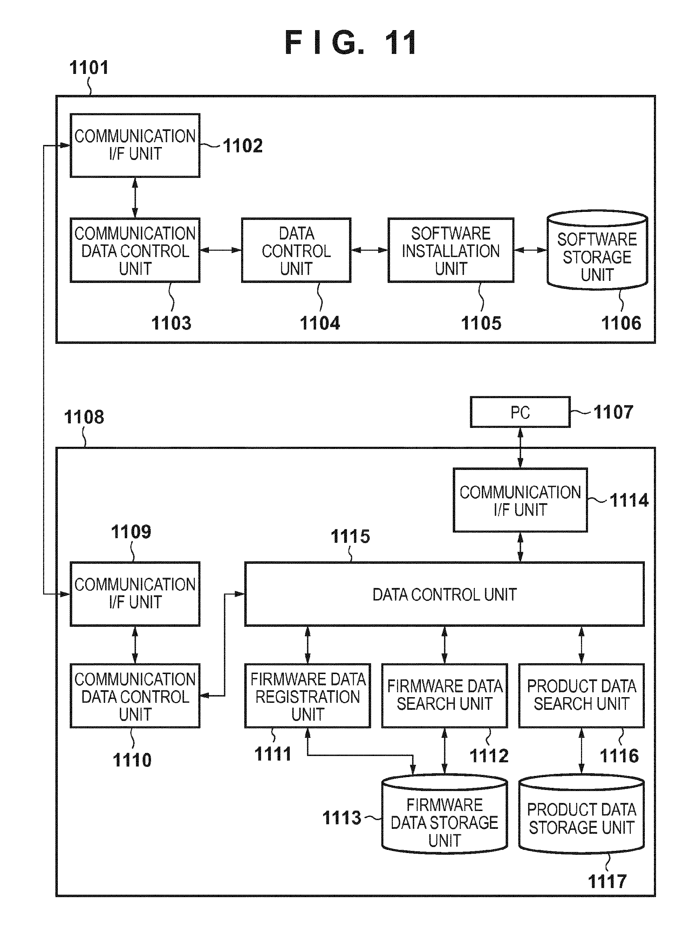

Fig. 11 is a block diagram showing a system for delivering firmware of an image forming apparatus;

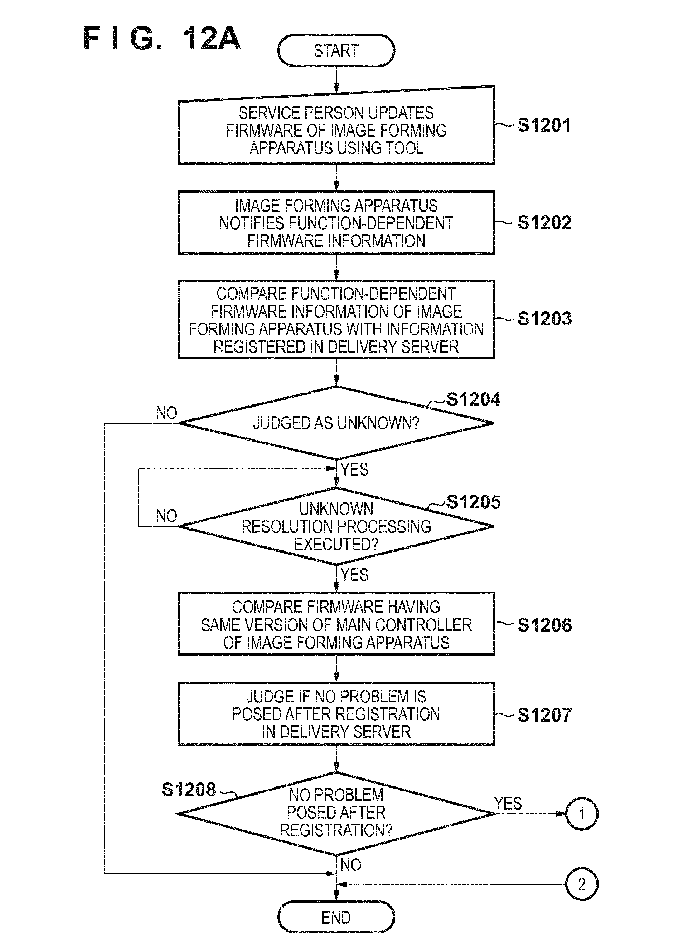

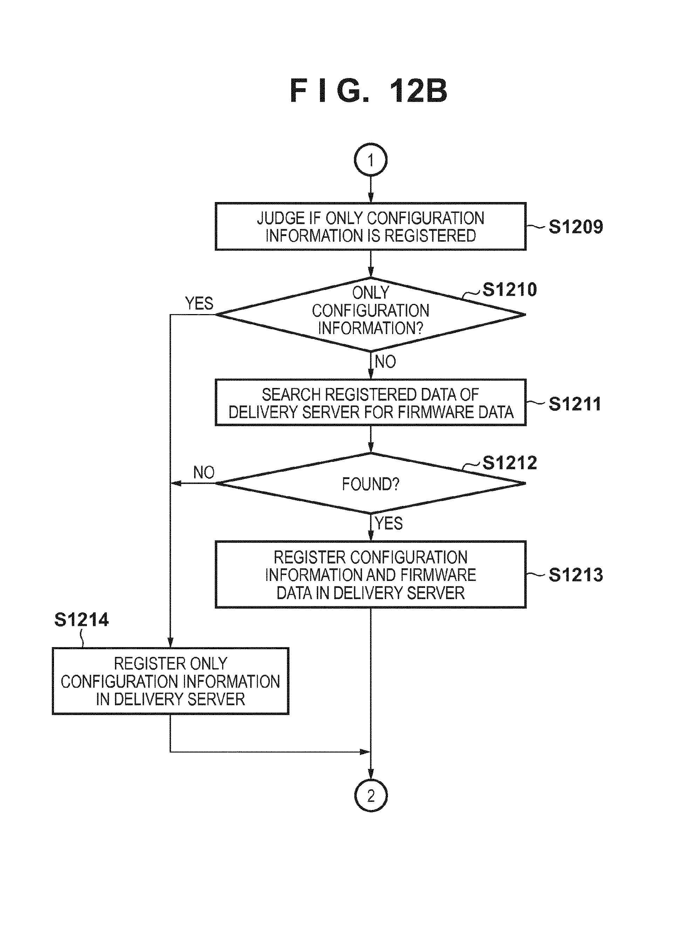

Figs. 12A and 12B are flowcharts showing registration processing to be executed by the delivery server;

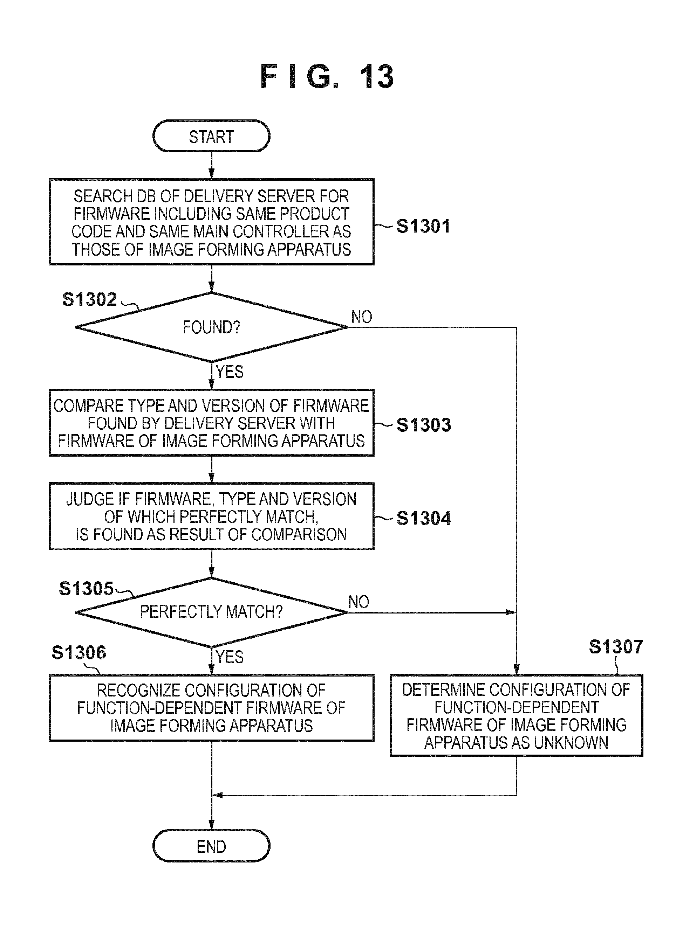

Fig. 13 is a flowchart showing details of processing in step S1203;

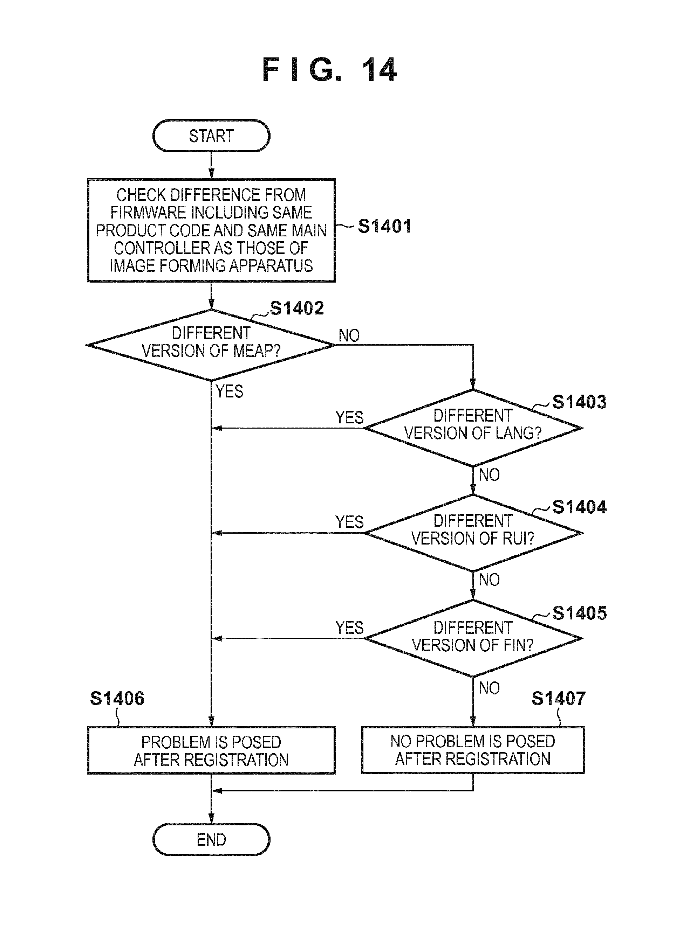

Fig. 14 is a flowchart showing details of processing in step S1207;

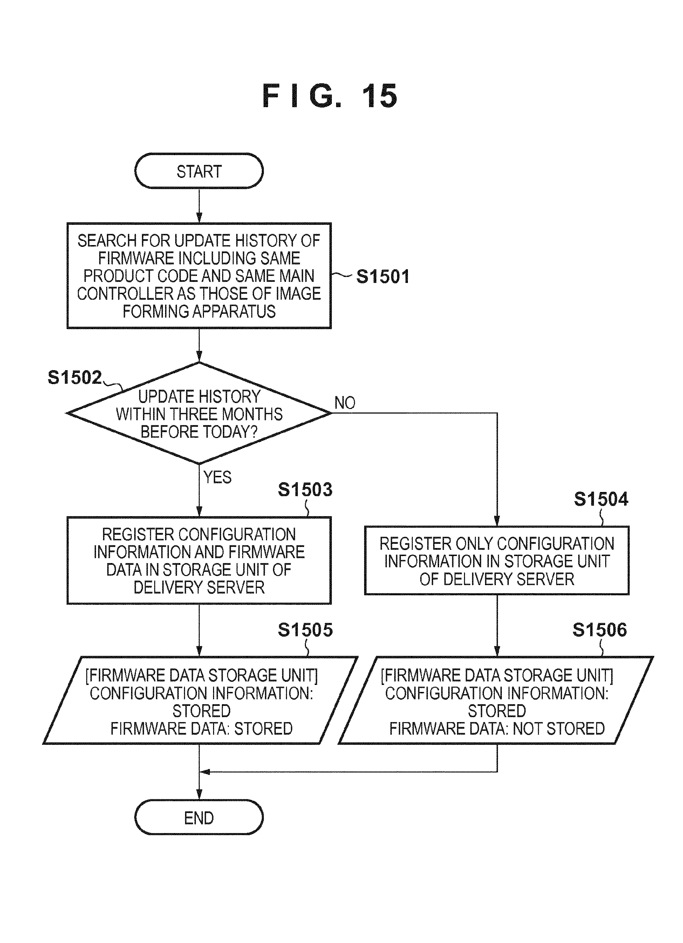

Fig. 15 is a flowchart showing details of processing in step S1209; and

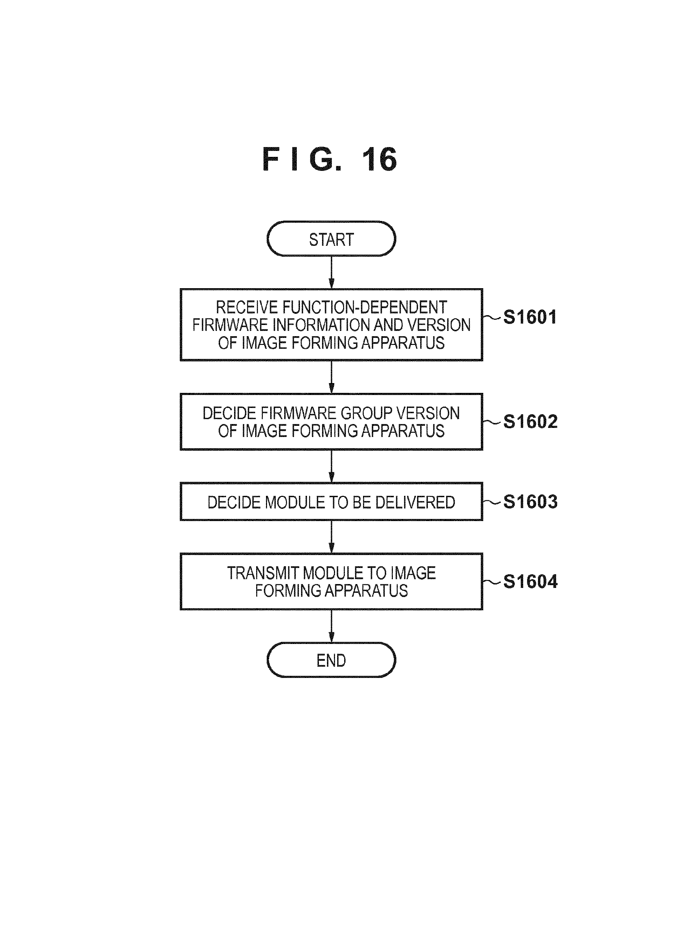

Fig. 16 is a flowchart showing processing for deciding a module and transmitting the decided module.

### DESCRIPTION OF THE EMBODIMENTS

An embodiment of the present invention will now be described, by way of example only, with reference to the accompanying drawings.

### <System Arrangement>

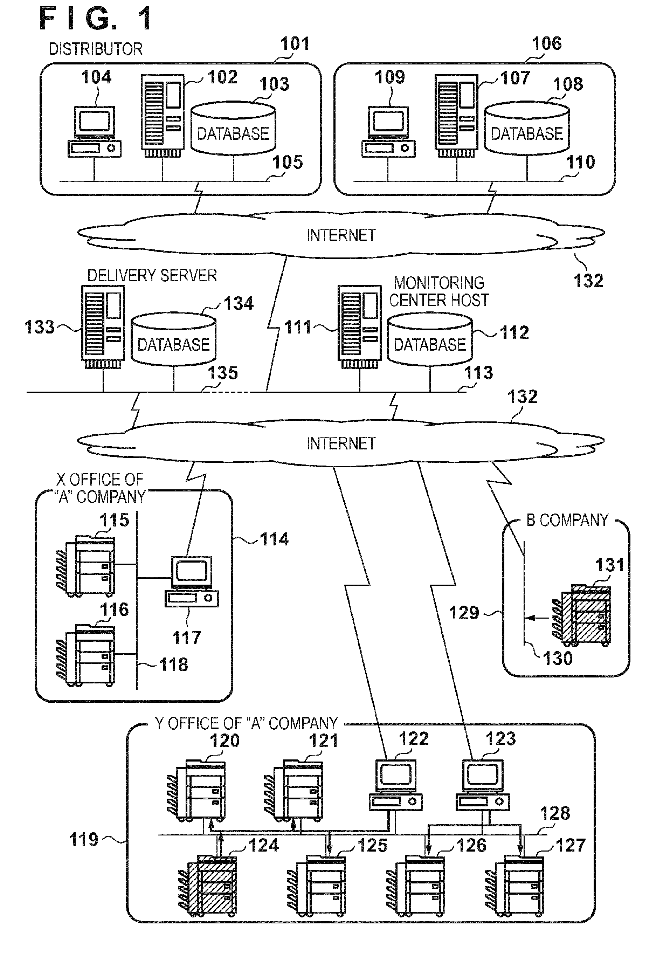

An example of the overall arrangement of a monitoring system according to this embodiment will be described first with reference to Fig. 1. As shown in Fig. 1, to the monitoring system, systems 101 and 106 of a plurality of distributors are connected. The systems 101 and 106 include databases 103 and 108 used to store sales information of a territory in charge and customers and information associated with the monitoring system.

The systems 101 and 106 also include personal computers (PCs) 104 and 109 which control data registration and modification with respect to the databases 103 and 108. The PCs 104 and 109 browse data by accessing a Web site provided by a monitoring center host 111 as a server on the Internet.

The systems 101 and 106 include distributor hosts 102 and 107, which respectively assume roles of providing services of the distributors such as charging processing and service person dispatching processing using data of the monitoring center host 111. These hosts 102 and 107 have operation units and display units, and can also assume roles of the PCs 104 and 109.

The aforementioned distributor host 102, database 103, and PC 104 are connected via a LAN 105, and the distributor host 107, database 108, and PC 109 are similarly connected via a LAN 110. Note that Fig. 1 illustrates that each of the systems 101 and 106 of the distributors is configured by a plurality of apparatuses, but the system may be configured by a single apparatus as long as functions to be described later can be achieved. For example, the databases 103 and 108 may be physically included in the distributor hosts 102 and 107, or may be located at remote places if they are accessible from the distributor hosts 102 and 107 via the Internet.

In this manner, the monitoring center host 111 exists between the distributor side and customer side. The monitoring center host 111 includes a database 112 which functions as a history storage device which stores information required for monitoring, counters of image forming apparatuses collected from the customer side, failure history information, a failure pattern table, and the like. The monitoring center host 111 and database 112 are connected via a LAN 113, and are connectable to the Internet via the LAN 113. Note that the database 112 may be physically included in the monitoring center host 111. Furthermore, the database 112 may be located at a remote place as long as it is accessible from the monitoring center host 111 via the Internet.

The monitoring center host 111 has a function of collecting, storing, and processing information of image forming apparatuses to be monitored, that indicating operating states, failure information, and the like from monitoring apparatuses 117, 122, 123, and 131 (to be described later), and externally providing warnings and the like. For example, the monitoring center host 111 has a role (function) of delivering these pieces of information to the distributor hosts 102 and 107. These pieces of information include, for example, out-of-toner, door open, drum exchange, cartridge absence, cooling fan abnormality, board abnormality, platen glass contamination, out-of-staple, paper feed sensor insufficient light amount, and the like. Also, these pieces of information include font memory overflow, rendering error, fixing device abnormality, counter abnormality, double-sided unit abnormality, paper jam, and the like. Furthermore, these pieces of information include, as counter information, charging counters to be charged by the distributors, department counters to be tallied for respective departments of customers, size-dependent counters to be tallied for respective paper sizes, expendable counters indicating degrees of use of expendables in image forming apparatuses, and the like.

The aforementioned charging counter indicates the number of printed sheets of each image forming apparatus, and the department counter indicates the number of printed sheets for each department set by a customer. The expendable counter for, for example, a drum counts the number of rotations, and that for, for example, a scanner lamp counts a time period (sec). Information indicating these operating states is used as operating information.

Furthermore, the distributor hosts 102 and 107 can register pieces of information of image forming apparatuses to be monitored and settings associated with monitoring in the monitoring center host 111. The monitoring center host 111 can merge the pieces of information of image forming apparatuses to be monitored and settings associated with monitoring, which are registered from the distributor hosts 102 and 107, and can manage them in an integrated fashion. Also, the monitoring center host 111 can make settings associated with monitoring in the monitoring apparatuses 117, 122, and 123, and an image forming apparatus 131.

In this case, services of the monitoring system are provided based on contracts between the distributors and customers. Therefore, only image forming apparatuses which are decided by the distributors as monitoring targets based on the contracts are monitoring targets of the monitoring system. The monitoring center host 111 provides, to PCs connected via the Internet, a Web page used to browse information stored in the database 112 or processed information. This Web page is provided by limiting contents to be browsed depending on the distributors, customers, and user's authorities via user authentication. Furthermore, some data are allowed to be changed from the Web page.

A delivery server 133 is located between the distributor side and customer side. A database 134 stores firmware programs, applications, software license information, and the like to be applied to image forming apparatuses, and functions as a storage device. The delivery server 133 and database 134 are connected via a LAN 135, and are connectable to the Internet via the LAN 135. Note that the database 134 may be physically included in the delivery server 133. Furthermore, the database 134 may be located at a remote place as long as it is accessible from the delivery server 133 via the Internet. The LANs 113 and 135 may be a single LAN, and the databases 134 and 112 may share data.

The example shown in Fig. 1 illustrates the monitoring center host 111, database 112, delivery server 133, and database 134 each by one. However, in practice, in order to attain information collection from many image forming apparatuses and monitoring apparatuses and to distribute firmware delivery loads, distribution processing may be executed using a plurality of monitoring center hosts and databases. Also, delivery processing may be executed using a plurality of delivery servers and databases. In the following description, the delivery server 133 and the database 134 which can communicate with the delivery server 133 will be collectively referred to as a "delivery system" for the sake of simplicity.

The system arrangement on the customer side will be described below. As an environment on the customer side, a plurality of different environments exist. Fig. 1 shows customer systems 114, 119, and 129. In the customer system 114 (X office of A company), image forming apparatuses 115 and 116 are monitored by a monitoring apparatus 117 via a LAN 118 connectable to the Internet, and the monitoring apparatus 117 can communicate with the monitoring center host 111 via the Internet.

On the other hand, in the customer system 119 (Y office of A company), image forming apparatuses 120, 121, and 124 to 127 on a LAN 128 are managed by monitoring apparatuses 122 and 123. In this example, the monitoring apparatus 122 manages the image forming apparatuses 120, 121, 124, and 125, and the monitoring apparatus 123 manages the image forming apparatuses 126 and 127.

In the customer system 129 (B company), an image forming apparatus 131 itself can directly communicate with the monitoring center host 111 via a LAN 130 connectable to the Internet, and the Internet. The image forming apparatus 131 has the same functions as those of the monitoring apparatuses 117, 122, and 123, and positively transmits self information (for example, counter information and occurrence of failures and the like) to the monitoring center host 111.

Note that the following points have to be noted.

(1) Communications via the Internet in the aforementioned arrangement can use HTTP/SOAP protocols. Note that "SOAP" is short for "Simple Object Access Protocol". SOAP is a protocol required to call data and services from a certain computer to another computer based on XML (extended Markup Language). In this example, SOAP is implemented on HTTP. SOAP communications are made by exchanging SOAP messages generated by appending additional information to XML documents.

Therefore, a computer which supports this SOAP includes a SOAP message generation unit which generates a SOAP message, and a SOAP message interpretation unit which interprets a SOAP message. State information of an image forming apparatus is transmitted to the monitoring center host 111 using a SOAP message in this embodiment.

(2) In the above description, the respective image forming apparatuses of A company communicate with the monitoring center host 111 via the monitoring apparatuses. However, by changing settings, these image forming apparatuses may communicate with the monitoring center host without the intervention of any monitoring apparatus like in the image forming apparatus 131 installed in B company.

### <Hardware Arrangement>

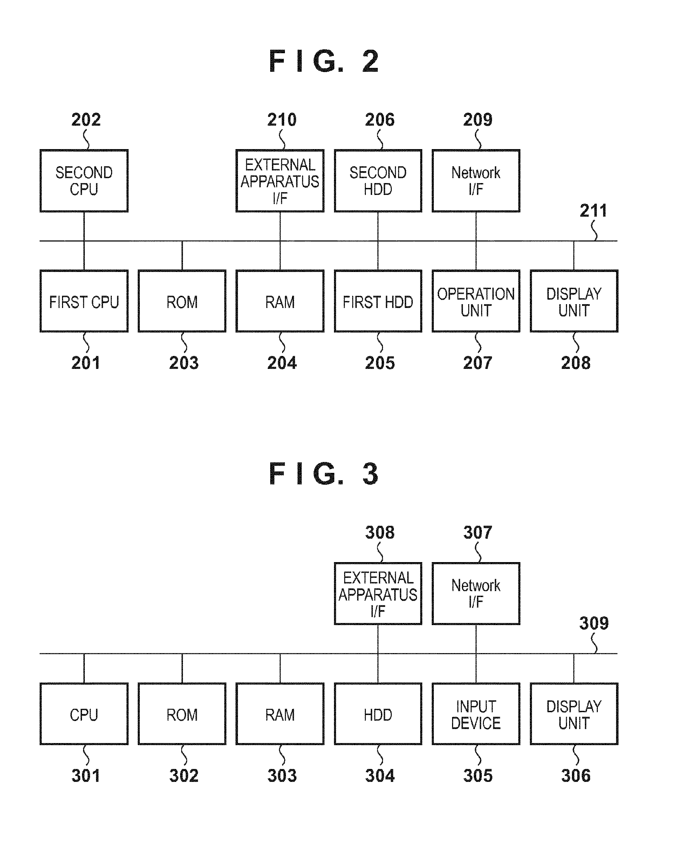

An example of the hardware arrangement of the monitoring center host 111 will be described below with reference to Fig. 2. Note that the hardware arrangements of the delivery server 133 and distributor hosts 102 and 107 are the same as that of the monitoring center host 111.

Referring to Fig. 2, a first CPU 201 and second CPU 202 control respective processes of the monitoring center host 111. A non-rewritable ROM 203 stores programs and data associated with the respective processes. A RAM 204 can electrically store temporary data associated with the respective processes, and is rewritable.

A first HDD 205 and second HDD 206 store programs and data associated with the respective processes, temporary data, information associated with image forming apparatuses to be monitored, information collected from image forming apparatuses, and the like. For example, parts counters, charging counters, department counters, and the like are saved in the HDDs.

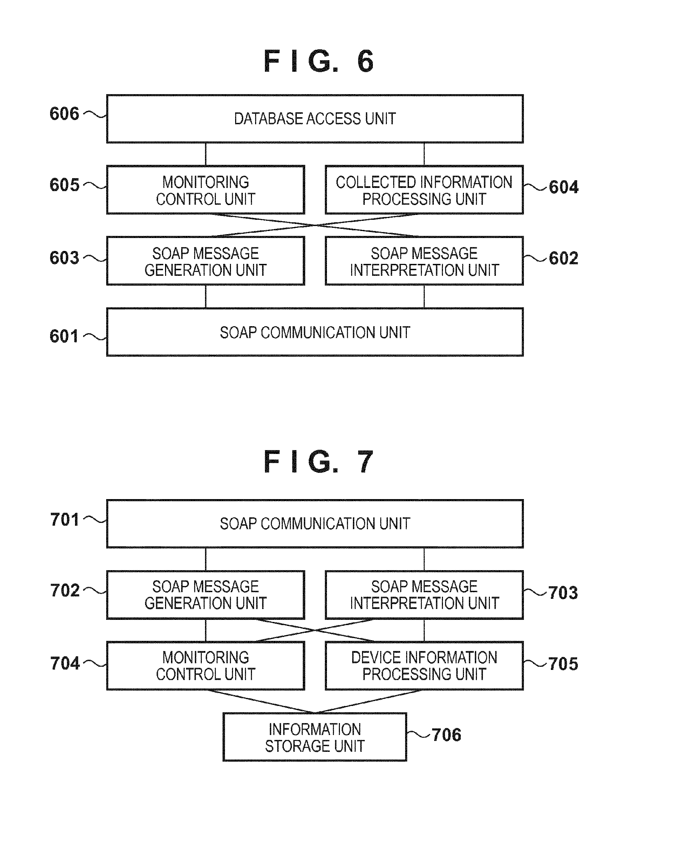

In case of the monitoring center host 111, a processing program shown in Fig. 6 (to be described later) is stored in the first HDD 205. This program is read out by the first or second CPU 201 or 202 using the RAM 204 as a temporary saving area when it is executed. In case of the delivery server 133 as well, the processing program shown in Fig. 6 (to be described later) is stored in the first HDD 205. This program is read out by the first or second CPU 201 or 202 using the RAM 204 as a temporary saving area when it is executed.

An operation unit 207 functions as an input device including a keyboard and pointing device, which are used to accept instruction inputs to the monitoring center host 111. A display unit 208 displays operation statuses of the monitoring center host 111, and information output from running programs. A Network I/F 209 establishes connection to the LAN or Internet via a network to exchange information with external apparatuses. An external apparatus I/F 210 connects an external storage device and the like. These components are connected to each other via a system bus 211 so as to exchange data.

An example of the hardware arrangement of the monitoring apparatuses 117, 122, and 123 will be described below with reference to Fig. 3. Also, the hardware arrangements of the PCs 104 and 109 are the same as that shown in Fig. 3.

A CPU 301 controls respective processes on the monitoring apparatus. A ROM 302 stores programs and data associated with the respective processes, and is non-rewritable. A RAM 303 can electrically store temporary data associated with the respective processes, and is rewritable. In the monitoring apparatus 117, programs and data associated with the respective processes, temporary data, information associated with image forming apparatuses to be monitored, information collected from the image forming apparatuses, and the like are stored in an HDD 304. In the PCs 104 and 109, a Web page and the like are stored in the HDD 304.

An input device 305 includes a keyboard and pointing device used to accept instruction inputs to the monitoring apparatus. A display unit 306 displays operation statuses of the monitoring apparatus, and information output from respective programs which run on the apparatus. A Network I/F 307 establishes connection to the LAN or Internet via a network so as to exchange information with external apparatuses. An external apparatus I/F 308 connects an external storage device or the like. These components are connected to each other via a system bus 309 so as to exchange data.

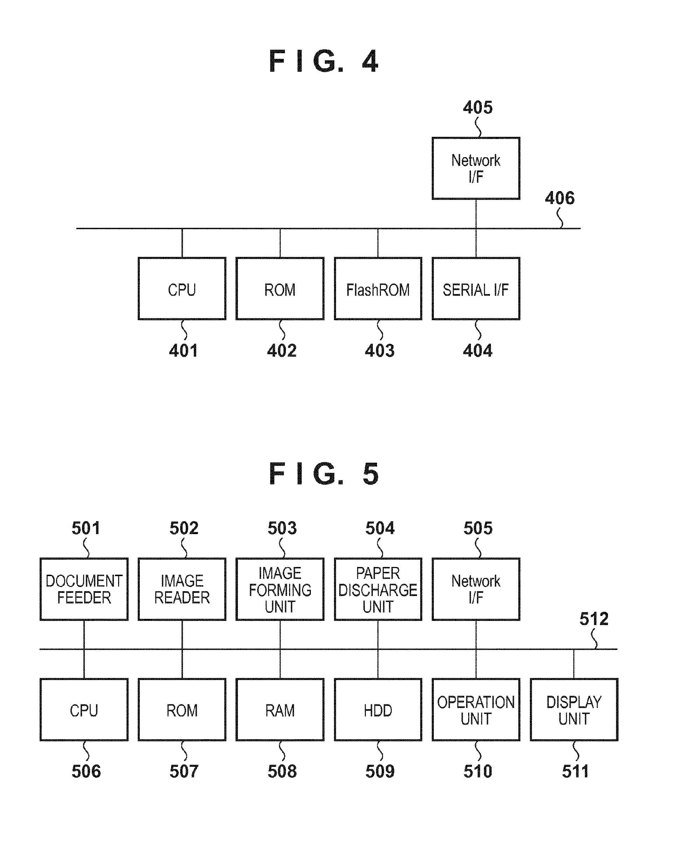

Another hardware arrangement of the monitoring apparatuses 117, 122, and 123 will be described below with reference to Fig. 4. A CPU 401 controls respective processes on the monitoring apparatus. A ROM 402 stores programs and data associated with the respective processes, and is non-rewritable. A Flash ROM 403 stores data associated with the respective processes, temporary data, information associated with image forming apparatuses to be monitored, information collected from the image forming apparatuses, and the like. A program on the monitoring apparatus outputs errors and logs, and a serial I/F 404 can connect a terminal using a serial cable. A Network I/F 405 establishes connection to the LAN or Internet via a network so as to exchange information with external apparatuses. These components are connected to each other via a system bus 406 so as to exchange data.

An example of the hardware arrangement of the image forming apparatuses 115, 116, 120, 121, 124 to 127, and 131 will be described below with reference to Fig. 5. The image forming apparatus includes an MFP (Multi Function Peripheral) which integrates printer and FAX functions, a printer (including an electrophotographic system and ink-jet system) which prints data received from a PC or the like, a scanner, a FAX, and the like. Fig. 5 shows the arrangement of the MFP as an example of the image forming apparatus.

An image reader 502 reads a document using a document feeder 501. The image reader 502 and an image forming unit 503 convert a read document or data received via a network into a print image, and print it out. A paper discharge unit 504 discharges printed sheets, and applies processes such as sorting and stapling. A Network I/F 505 establishes connection to the LAN or Internet via a network so as to exchange information with external apparatuses.

A CPU 506 controls respective processes on the image forming apparatus. The CPU 506 monitors an operation state of the image forming apparatus. When a specific event such as a failure has occurred, the CPU 506 transmits state information indicating that state to a predetermined destination. The destination includes, for example, the monitoring center host 111, monitoring apparatus, and the like. A ROM 507 as a nonvolatile storage device stores programs and data associated with the respective processes. A rewritable RAM 508 electrically stores temporary data associated with the respective processes. An HDD 509 stores programs and data associated with the respective processes, temporary data, user data transmitted to the image forming apparatus, and the like. Note that firmware programs to be updated in this embodiment are programs and/or data which are stored in a nonvolatile storage device (for example, a flash memory (not shown)), which is electrically erasable and allows to make write accesses to a free area. Also, version information associated with each stored function-dependent firmware program is readably stored. The firmware update sequence of this embodiment is also applicable to the update sequence of program files stored in the HDD 509.

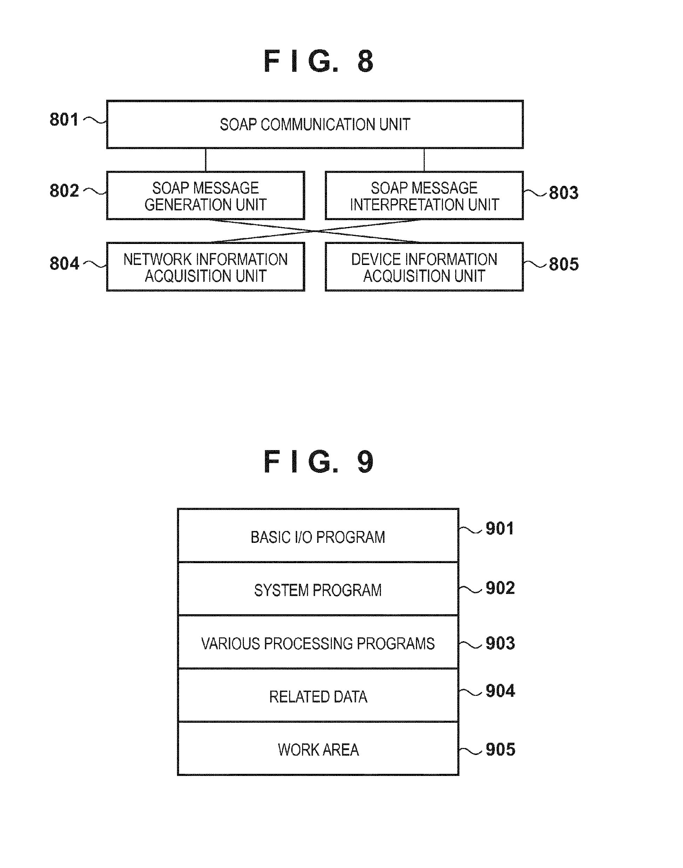

The image forming apparatus stores a processing program shown in Fig. 8 (to be described later) in the HDD 509. This program is read out by the CPU 506 using the RAM 508 as a temporary saving area when it is executed.

An operation unit 510 accepts instruction inputs to the image forming apparatus. A display unit 511 displays operation statuses of the image forming apparatus, and information associated with an operation to the operation unit 510. These components are connected to each other via a system bus 512 so as to exchange data.

Note that in the image forming apparatus 131, which has the function of positively transmitting information required for monitoring by itself, the ROM 507 or HDD 509 stores a program and data associated with monitoring data output processing.

### <Software>

An example of the software configuration of a part associated with a monitoring system in the monitoring center host 111 and delivery server 133 will be described below with reference to Fig. 6. A SOAP communication unit 601 passes SOAP data received from the monitoring apparatus 117, 122, or 123 or the image forming apparatus 131 via the Network I/F 209 to a SOAP message interpretation unit 602. Also, the SOAP communication unit 601 transmits SOAP data generated by a SOAP message generation unit 603 to the monitoring apparatus 117, 122, or 123 or the image forming apparatus 131 via the Network I/F 209.

A collected information processing unit 604 stores information received from the monitoring apparatus 117, 122, or 123 or the image forming apparatus 131, the monitoring processing of which is underway, intact in the database 112 or 134 via a database access unit 606. Or the processing unit 604 stores the received information in the database 112 or 134 after it processes that information.

Also, the collected information processing unit 604 implements a function associated with a remote monitoring system. The collected information processing unit 604 notifies a service person in charge or customer-side administrator of tallied counter information, error information, and latest firmware information based on information received from the monitoring apparatus 117, 122, or 123 or the image forming apparatus 131, the monitoring processing of which is underway, and data stored in the database 112 or 134.

A monitoring control unit 605 manages a schedule to acquire information of the monitoring apparatus 117, 122, or 123 or the image forming apparatus 131, and controls the monitoring contents and method. Furthermore, the monitoring control unit 605 transmits an instruction to the monitoring apparatus 117, 122, or 123 or the image forming apparatus 131, the monitoring processing of which is underway, via the SOAP message generation unit 603, SOAP communication unit 601, and Network I/F 209 as needed.

An example of the software configuration of a part associated with a monitoring system in the monitoring apparatuses 117, 122, and 123 will be described below with reference to Fig. 7. A SOAP communication unit 701 passes SOAP data received from the monitoring center host 111 via the Network I/F 307 or 405 to a SOAP message interpretation unit 703. Also, the SOAP communication unit 701 transmits SOAP data generated by a SOAP message generation unit 702 to the monitoring center host 111 or delivery server 133 via the Network I/F 307 or 405.

A monitoring control unit 704 updates monitoring image forming apparatus information to be held in an information storage unit 706 and acquires information of the image forming apparatuses 115 and 116 according to monitoring settings from the monitoring center host 111 (to be described later), thus managing a schedule.

A device information processing unit 705 stores, in the information storage unit 706, counter information and information such as service calls, jams, out-of-toner errors, and the like, which are positively collected from the image forming apparatuses 115 and 116 by the monitoring apparatus 704. This storage operation is executed according to the states of the image forming apparatuses 115 and 116.

Data stored in the information storage unit 706 is passed intact to the SOAP message generation unit 702 via the device information processing unit 705, and is transmitted to the monitoring center host 111.
Or that data is interpreted and processed in the device information processing unit 705, is then passed to the SOAP message generation unit 702, and is transmitted to the monitoring center host 111 in some cases.

An example of the software configuration of a part associated with a monitoring system in the image forming apparatuses 115, 116, 120, 121, 124 to 127, and 131 will be described below with reference to Fig. 8.
A SOAP communication unit 801 passes SOAP data received from the monitoring center host 111 or delivery server 133 via the Network I/F 505 to a SOAP message interpretation unit 803. Also, the SOAP communication unit 801 transmits SOAP data generated by a SOAP message generation unit 802 to the monitoring center host 111 or delivery server 133 via the Network I/F 505.

A network information acquisition unit 804 can automatically acquire an IP address, DNS server, and gateway address in case of a DHCP environment. Or the network information acquisition unit 804 acquires network information which is input from the operation unit 510 and is saved in the HDD 509 if such information is available.

A device information collection unit 805 acquires internally held counter information and information such as service calls, jams, out-of-toner errors, and the like, which have occurred internally, in accordance with a schedule inside the MFP or an instruction from the monitoring center host 111. The acquired data is passed intact to the SOAP message generation unit 802, and is transmitted to the monitoring center host 111. Or the data is stored, interpreted, and processed in the device information collection unit 805, is then passed to the SOAP message generation unit 802, and is transmitted to the monitoring center host 111.

The structure of a memory map in the monitoring center host 111, delivery server 133, monitoring apparatus 117, 122, or 123, or any of image forming apparatuses 115, 116, 120, 121, 124 to 127, and 131 will be described below with reference to Fig. 9. Fig. 9 shows the memory map when programs are loaded onto the RAM 204 in the monitoring center host 111, on the RAM 303 or Flash ROM 403 in each monitoring apparatus 117, 122, or 123, or on the RAM 508 in each image forming apparatus.

The memory map is configured by a basic I/O program 901, a system program 902, various processing programs 903 including processing programs of this embodiment, related data 904, and a work area 905 of the programs. The basic I/O program 901 executes input/output control on the apparatus. The system program 902 provides an operation environment to the respective processing programs.

Note that when an area used for programs and data and a work area becomes insufficient due to a limited capacity, the first or second HDD 205 or 206, HDD 304, or HDD 509 may be handled as a part of an area of the RAM 204, RAM 303, or RAM 508.

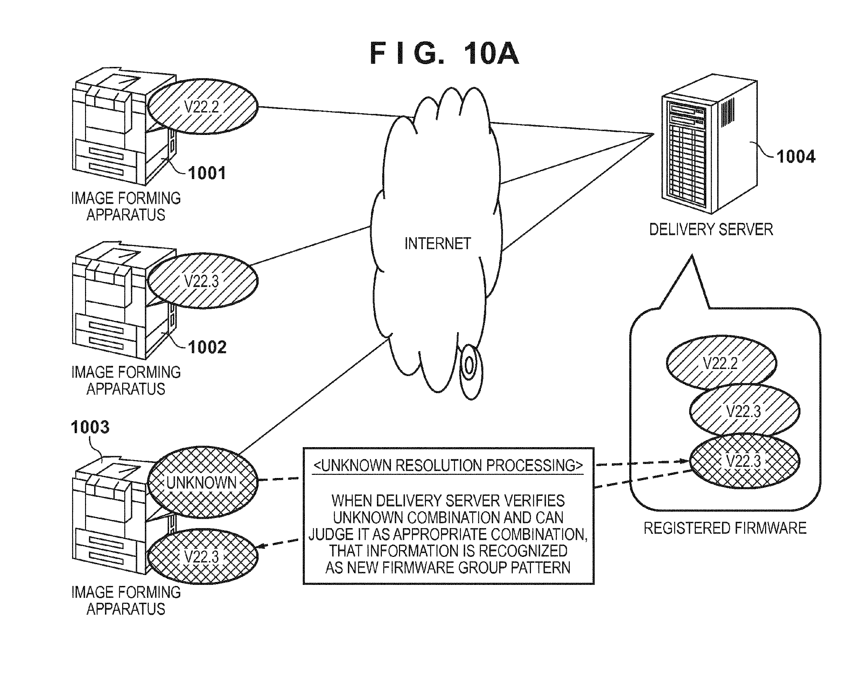

Processing executed when the delivery system manages a plurality of firmware programs of the image forming apparatuses, and delivers firmware programs to the image forming apparatuses in the aforementioned arrangement will be described below with reference to the conceptual view shown in Fig. 10A.

As shown in Fig. 10A, a delivery server 1004 collects information of function-dependent firmware programs of a plurality of image forming apparatuses 1001, 1002, and 1003 installed on the customer side. Figs. 10B-1, 10B-2, and 10B-3 respectively show the configurations of pieces of information of function-dependent firmware programs registered in the plurality of image forming apparatuses 1001, 1002, and 1003.

In each of Figs. 10B-1, 10B-2, and 10B-3, "serial No." is an identifier (ID) unique to the image forming apparatus. Also, "firmware group version recognized by delivery server" is a firmware group version which is recognized by the delivery server 1004 from information "function-dependent firmware: version" indicating a combination of function-dependent firmware programs installed in the image forming apparatus and their versions.

Then, in the example shown in Fig. 10A, firmware group versions V22.2 and V22.3 are registered in the delivery server 1004. Details of the versions V22.2 and V22.3 are shown in firmware groups 1021 and 1022 shown in Fig. 10C.

The image forming apparatuses 1001, 1002, and 1003 transmit pieces of information of their own function-dependent firmware programs to the delivery server 1004 using client modules. This timing will be described later with reference to Figs. 12A and 12B. The delivery server 1004 identifies the configuration of function-dependent firmware programs of each image forming apparatus by comparing the received information of function-dependent firmware programs with firmware groups registered in itself.

Then, the delivery server 1004 compares the versions of the function-dependent firmware programs of each image forming apparatus with those of function-dependent firmware programs in respective firmware groups included in a firmware group list 1014 registered in itself, thus determining whether or not they perfectly match. As a result, function-dependent firmware programs 1011 of the image forming apparatus 1001 match those which belong to a firmware group of the version V22.3 of the delivery server 1004. "Match" means that information including identifiers and versions of function-dependent firmware programs match all of function-dependent firmware programs which belong to a firmware group.

As shown in the firmware group list 1014 in Fig. 10C, the delivery server 1004 classifies and manages a plurality of firmware groups using product codes and firmware group versions of image forming apparatuses. In this case, assume that as the firmware group version, a version of a main controller (MN_CONT) is used.

Therefore, the firmware group version of the image forming apparatus 1001 can be identified as "V22.2". Likewise, the firmware group version of the image forming apparatus 1002 can be identified as "V22.3". For the image forming apparatuses, the firmware group versions of which can be identified, batch update processing of firmware programs by the delivery server 1004 can be executed.

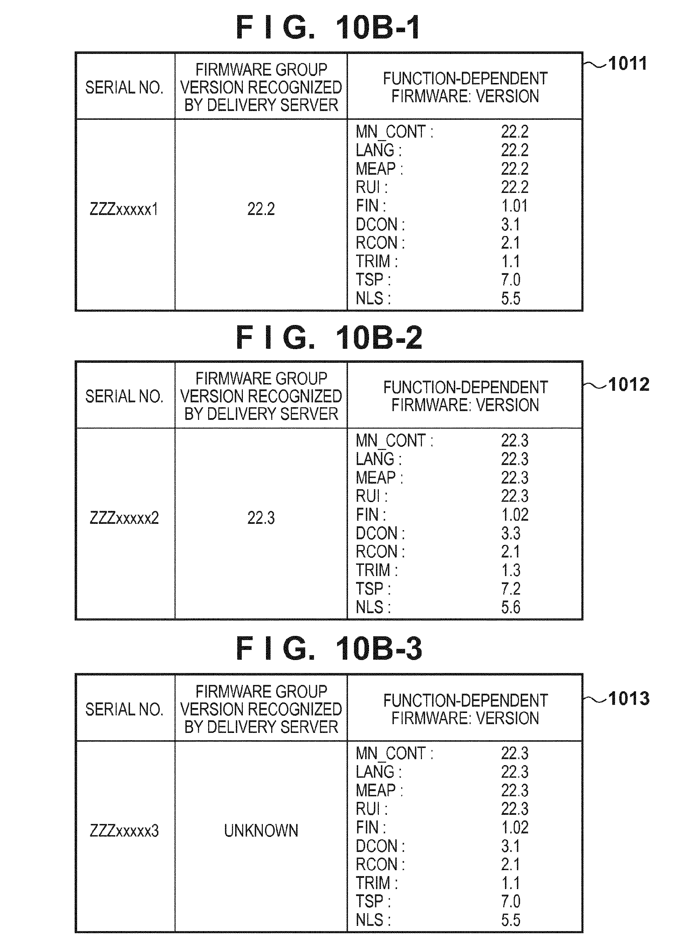

On the other hand, the configuration of function-dependent firmware programs of the image forming apparatus 1003 is as shown in function-dependent firmware programs 1013 of Fig. 10B-3. For this reason, the firmware group of the image forming apparatus 1003 does not match either the version 22.2 or 22.3 by the comparison processing (1015, 1016) of the firmware groups by the delivery serer 1004. As a result, the firmware group version of the image forming apparatus 1003 is judged as "unknown" (1017). Note that arrows 1015 to 1020 in Fig. 10C are symbols described for the descriptive purpose, and do not always indicate data and control flows.

To cope with such situation, in this embodiment, the delivery server 1004 executes "unknown resolution processing" (1018), thereby resolving the unknown state. This "unknown resolution processing" may be used when an image forming apparatus on the customer side is required to be emergently updated to cope with failures occurred at a client site, or may be used to recognize the state of an image forming apparatus on the customer side. Also, that processing may be used in other cases.

The "unknown resolution processing" may be designated from a Web screen, which is displayed on a client at which the user makes an update operation of firmware programs of an image forming apparatus, and is used to operate the delivery server, or may be executed to have another method as a trigger. In this embodiment, the "unknown resolution processing" is executed when the user presses an unknown resolution processing execution button 1026 on a Web screen 1024, which is provided by the delivery server 1004 to be displayed on the client, as shown in Fig. 10D.

As shown in Fig. 10A, when the user designates the "unknown resolution processing" from the Web screen 1024 of the delivery server 1004, the delivery server 1004 verifies the configuration of the function-dependent firmware programs of the image forming apparatus 1003 in the unknown state again. Fig. 10C shows an execution state of this "unknown resolution processing". In "unknown resolution processing" 1018, a combination of the function-dependent firmware programs and versions of the image forming apparatus 1003 is compared again with the firmware groups registered in the delivery server. In the example shown in Fig. 10C, which of the firmware group list 1014 of the delivery server matches is determined based on the function-dependent firmware information 1013 of the image forming apparatus 1003.
In this case, the function-dependent firmware information 1013 and the firmware group 1021 include the main controller (MN_CONT) of different versions as core firmware of the image forming apparatus, and it is determined that they do not match.

Next, the function-dependent firmware information 1013 and firmware group 1022 include MN_CONT, LANG, MEAP, RUI, and FIN of the same versions, but DCON, TRIM, TSP, and NLS of different versions.

When the unknown resolution processing is executed (1018), and it is judged as a result of checking that differences do not pose any problem in terms of the operation of the image forming apparatus, the function-dependent firmware information obtained from the image forming apparatus is registered as a new combination pattern of function-dependent firmware programs in the delivery server 1004 (1019). In the example of Fig. 10C, since key function-dependent firmware programs (MN_CONT, LANG, MEAP, RUI, and FIN) and their versions of the image forming apparatus are the same as those of the firmware group 1022, the delivery server 1004 judges that no problem is posed. The key function-dependent firmware programs of the image forming apparatus may be determined in advance. Details of this processing will further be described later using Fig. 14.

In this manner, when the delivery server 1004 judges that no problem is posed as a result of verification, the function-dependent firmware information 1013 is newly registered as a firmware group 1023. In this case, "22.3" as the version of MN_CONT is given as a firmware group version. Therefore, since the function-dependent firmware information 1013 of the image forming apparatus 1003 is registered as the firmware group 1023, the firmware group version of the image forming apparatus 1003 can be recognized, and "unknown version" 1025 can be resolved (1020). For this reason, the firmware programs of the image forming apparatus 1003 can also be simultaneously updated by the delivery server.

Processing executed when the delivery system manages a plurality of firmware programs of an image forming apparatus and controls delivery processing of firmware programs will be described below with reference to the block diagram shown in Fig. 11. Note that the delivery system is configured by the delivery server 133 and database 134 shown in Fig. 1, but it will be described as "delivery server" below.

The functions of an image forming apparatus 1101 will be described first. A communication I/F unit 1102 interfaces communications between the image forming apparatus 1101 and a delivery server 1108. A communication data control unit 1103 controls data exchanged via the communication I/F unit 1102. A data control unit 1104 controls data in the image forming apparatus 1101.

A software installation unit 1105 installs firmware data transmitted from the delivery server 1108 in the image forming apparatus 1101. In this case, assume that [software] includes general application software and firmware. A software storage unit 1106 stores software data in the image forming apparatus 1101. The software storage unit 1106 includes a hard disk or the like for software, and a flash memory or the like for firmware.

Next, a PC 1107 allows the user to operate a Web screen of the delivery server 1108 to upload firmware. Conversely, firmware can also be downloaded from the delivery server 1108 to the PC 1107.

Functions of the delivery server 1108 will be described below. A communication I/F unit 1109 of the delivery server 1108 interfaces communications between the image forming apparatus 1101 and delivery server 1108. A communication data control unit 1110 controls data exchanged via the communication I/F unit 1109. A firmware data registration unit 1111 registers information associated with firmware in a firmware data storage unit 1113. A firmware data search unit 1112 searches for information associated with firmware stored in the firmware data storage unit 1113. The firmware data storage unit 1113 stores information associated with firmware data to be delivered to the image forming apparatus 1101.

A communication I/F unit 1114 interfaces communications between the delivery server 1108 and PC 1107. A data control unit 1115 controls data in the delivery server 1108. A product data search unit 1116 searches a product data storage unit 1117 for data such as a product code and serial No. related to firmware. The product data storage unit 1117 stores product data related to firmware and the like.

Registration processing executed by the delivery server 1108 will be described below with reference to the flowchart shown in Figs. 12A and 12B. In step S1201, a service person updates respective function-dependent firmware programs of an image forming apparatus on the customer side using a firmware rewrite tool via USB or an intranet. In step S1202, at the change timing of the firmware configuration of the image forming apparatus in step S1201, the image forming apparatus notifies the delivery server of function-dependent firmware information. This notification is made by a client module of the image forming apparatus when the firmware configuration information has been changed.

In step S1203, the function-dependent firmware programs of the image forming apparatus transmitted in step S1202 are compared with firmware groups registered in the delivery server to determine whether or not a firmware group version of the image forming apparatus is "unknown". Details of this processing will further be described later using Fig. 13. If it is determined in step S1204 as a result of comparison that no firmware group which is the same as the function-dependent firmware programs of the image forming apparatus is registered in the delivery server, the firmware group version is determined as "unknown", and the process advances to step S1205. On the other hand, if a firmware group which is the same as the function-dependent firmware programs of the image forming apparatus is registered in the delivery server, the firmware group version is determined as "not unknown", thus ending this processing.

It is checked in step S1205 whether or not the aforementioned unknown resolution processing is executed. As a result of checking, if the unknown resolution processing is executed, the process advances to step S1206; otherwise, the control waits until the unknown resolution processing is executed. In this embodiment, the user designates "unknown resolution processing" from a Web screen of a client provided by the delivery server, and the process advances from step S1205 to step S1206.

In step S1206, a combination of the function-dependent firmware programs and versions of the image forming apparatus is compared again with firmware groups registered in the delivery server. First, firmware of a main controller of the image forming apparatus is compared. Then, a firmware group which includes the same firmware and the same version as those of the main controller of the image forming apparatus is detected. Then, in that firmware group, function-dependent firmware programs other than the main controller are compared. It is judged in step S1207 whether or not a problem is not posed when the configuration of function-dependent firmware programs of the image forming apparatus is registered in the delivery server as a result of comparison in step S1206. Details of this processing will further be described later using Fig. 14. If no problem is posed when the configuration of the function-dependent firmware programs of the image forming apparatus is registered in the delivery server, the process advances from step S1208 to step S1209. However, if a problem is posed, this processing ends.

It is judged in step S1209 whether both firmware data and configuration information are registered in the delivery server or only configuration information is registered. Details of this processing will further be described later using Fig. 15. In this case, the configuration information is combination information of pieces of identification information indicating function-dependent firmware programs and their versions included in each firmware group shown in Fig. 10C. Firmware data indicates firmware module data.

The delivery server need only have the configuration information when it merely recognizes the configuration of function-dependent firmware programs of an image forming apparatus on the customer side. However, in order to deliver firmware programs, firmware data are required as a matter of course. For this purpose, firmware data are often required to be registered together with the configuration information.

If it is determined in step S1210 that only the configuration information is registered, the process advances to step S1214; otherwise, the process advances to step S1211. In step S1214, only the configuration information is registered in the firmware data storage unit 1113 of the delivery server. On the other hand, in step S1211, registered data of the delivery server are searched for firmware data corresponding to the configuration information. If it is determined in step S1212 that firmware data corresponding to the configuration information are found, the process advances to step S1213; otherwise, the process advances to step S1214. In step S1213, the configuration information and firmware data are registered in the delivery server. Upon completion of the processing in one of steps S1214 and S1213, since a firmware group version corresponding to the configuration of function-dependent firmware programs of the image forming apparatus is specified, the "unknown" state can be resolved.

With the aforementioned sequence, the image forming apparatus in which function-dependent firmware programs have been individually updated may be handled as a batch update target by the delivery server in some cases. In this case, for example, although the version 22.3 is the latest version in Fig. 10C, if a firmware group of a version 22.4 is newly provided, the image forming apparatus 1013 can also be handled as a batch update target by the delivery server.

Details of the processing (S1203) for determining whether or not the firmware group version is "unknown" will be described below with reference to the flowchart shown in Fig. 13. In step S1301, the database of the delivery server is searched for firmware groups including the same product code and the same version of the main controller as those of the image forming apparatus. If the corresponding firmware groups are found in step S1302 as a result of the search, the process advances to step S1303; otherwise, the process advances to step S1307. In step S1303, function-dependent firmware programs included in the firmware groups found by the delivery server and their versions are compared with those of the image forming apparatus.

It is judged in step S1304 as a result of comparison in step S1303 whether or not a firmware group which perfectly matches the function-dependent firmware programs and versions of the image forming apparatus is found. If the firmware group which perfectly matches the function-dependent firmware programs and versions of the image forming apparatus is found in step S1305, the process advances to step S1306; otherwise, the process advances to step S1307. In step S1306, the delivery server recognizes the configuration of the function-dependent firmware programs of the image forming apparatus, that is, the firmware group version. On the other hand, in step S1307, since the delivery server cannot recognize the configuration of the function-dependent firmware programs of the image forming apparatus, it is determined that the firmware group version of the image forming apparatus is "unknown".

Details of the processing (S1207) for judging whether or not a problem is not posed if a new firmware group is registered will be described below with reference to the flowchart shown in Fig. 14. In step S1401, differences between the function-dependent firmware programs of the image forming apparatus and those included in the firmware group found in step S1206 are checked. In the firmware group found in step S1206, the product code and the version of the main controller match those of the image forming apparatus.

If the version of an embedded application platform (MEAP in each of Figs. 10B-1 to 10B-3) is different in step S1402, the process advances to step S1406; otherwise, the process advances to step S1403.

If the version of a page description language (LANG in each of Figs. 10B-1 to 10B-3) required to generate a bitmap image upon printing a document or an image is different in step S1403, the process advances to step S1406; otherwise, the process advances to step S1404.

If the version of a remote user interface (RUI) required to manage the image forming apparatus by accessing the image forming apparatus via a network and displaying current statuses and various kinds of information is different in step S1404, the process advances to step S1406; otherwise, the process advances to step S1405.

If the version of a finisher (FIN) which is connected to the image forming apparatus and executes post-processing such as three-folding or saddle stitching is different in step S1405, the process advances to step S1406; otherwise, the process advances to step S1407.

It is determined in step S1406 that "a problem is posed when the firmware group is registered". On the other hand, it is determined in step S1407 that "no problem is posed if the firmware group is registered". That is, when the versions of all the function-dependent firmware programs to be checked in Fig. 14 are matched, it is determined that the firmware group can be registered.

Since the firmware programs to be checked in steps S1403 to S1406 above and the main controller are a combination of key firmware programs, if their versions are different from the those of the firmware group registered in the delivery server, it is determined that a problem is posed if the firmware group is registered. Note that firmware programs to be used as key firmware are different depending on products.

Details of the processing (S1209) for determining whether or not only the configuration information is registered will be described below with reference to the flowchart shown in Fig. 15.

In step S1501, an update history of a firmware group including the same product code and the same main controller as those of the image forming apparatus is searched. It is judged in step S1502 if the last update history falls within a predetermined period (for example, three months) traced back from today (the day of the processing). If the last update history falls within the three months, the process advances to step S1503; otherwise, the process advances to step S1504. In step S1503, the configuration information and corresponding firmware data are registered in the firmware data storage unit 1113 of the delivery server. As a result of this processing, the state of the firmware data storage unit 1113 is changed to "configuration information: stored, firmware data: stored" in step S1505. Note that the update history is recorded every time the firmware group is updated by the delivery server, and includes, for example, the product code, the identifier and version of the function-dependent firmware of the main controller, the firmware group version, and the update date of the image forming apparatus. The firmware data can be registered by generating and saving association information between program files or data files of firmware programs and firmware configuration information.

In step S1504, only the configuration information is registered in the firmware data storage unit 1113 of the delivery server. As a result of this processing, the state of the firmware data storage unit 1113 is changed to "configuration information: stored, firmware data: not stored" in step S1506. That is, a firmware group having an update record within the three months is to be used for delivery, and its configuration information and firmware data are required to be registered. However, a firmware group which was updated before the three months is judged not to be used for delivery. In this case, only the configuration information suffices to be registered since it can be used to recognize only the firmware configuration of the image forming apparatus. Thus, the data volume of the delivery server can also be reduced.

A delivery method executed when the delivery server decides a module to be delivered, and delivers the decided module to the image forming apparatus will be described below with reference to the flowchart shown in Fig. 16. In step S1601, the product code and function-dependent firmware information and versions of the image forming apparatus are received from the image forming apparatus. In step S1602, the received product code and the function-dependent firmware information and versions are compared with respective pieces of information included in firmware groups stored in the firmware data storage unit 1113 to specify the firmware group and version of the image forming apparatus. If the firmware group and version of the image forming apparatus can be successfully specified, it is judged that batch update processing can be executed, and the process advances to step S1603.

In step S1603, a module to be delivered is decided from a firmware group including both the configuration information and firmware data in the firmware data storage unit 1113. For example, even when the firmware group has a new version, not all of function-dependent firmware programs are updated. Thus, firmware programs to be updated and downloaded are combined as a download module. In step S1604, the module decided in step S1603 is delivered to the image forming apparatus.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A delivery system (1108), for managing a plurality of programs of an image forming apparatus (1101) and for controlling delivery processing of the plurality of programs, comprising:
saving means (1113) for saving configuration information of a plurality of programs, for which batch update processing is permitted in the image forming apparatus (1101), as a firmware group;
collecting means (1115, S1202) for collecting pieces of information (1013) of the plurality of programs from the image forming apparatus (1101);
determination means (1112, S1203) for determining whether or not the pieces of collected information (1013) of the plurality of programs match configuration information of any previously saved firmware group (1021, 1022);
specifying means (1112, S1206, S1207, S1401-S1407) for, when the determination means determines that the pieces of collected information (1013) do not match the configuration information of the any previously saved firmware group (1021, 1022), specifying a previously saved firmware group (1022) which includes information in its configuration information that matches information of a specific program of the pieces of collected information (1013) of the plurality of programs; and
registration means (1111; S1213; S1214) for, when the specifying means specifies the previously saved firmware group (1022), registering, in the saving means (1113), the pieces of information (1013) of the plurality of programs collected by the collecting means as configuration information of a new firmware group (1023).

2. The system according to claim 1, wherein the information of the specific program of the pieces of collected information (1013) of the plurality of programs comprises information on a version of a main controller of the image forming apparatus (1101).

3. The system according to claim 1 or claim 2, wherein the registration means (1111) is also for registering, in the saving means (1113), programs of the pieces of information of the programs in association with the configuration information of the new firmware group (1023).

4. The system according to claim 1, claim 2 or claim 3, wherein the specifying means (1112) is further for, when the determination means determines that the pieces of collected information (1013) do not match the configuration information of the any previously saved firmware group (1021, 1022), specifying the previously saved firmware group (1022) which includes information in its configuration information that matches a version of an application platform, a page description language, a remote user interface, and a finisher of the image forming apparatus (1101), included in the pieces of collected information of the plurality of programs; and
wherein the registration means (1111) is further for, when the specifying means specifies the previously saved firmware group (1022), registering, in the saving means (1113), the pieces of information (1013) of the plurality of programs collected by the collecting means as the configuration information of the new firmware group (1023).

5. The system according to any one of claims 1 to 4, wherein the delivery system is configured to classify and manage a plurality of firmware groups (1021, 1022, 1023) in the saving means (1113) using product codes and firmware group versions of image forming apparatuses (1001, 1002, 1003).

6. The system according to any one of claims 1 to 5, wherein the configuration information of a firmware group (1021, 1022, 1023) includes a type and a version of a firmware.

7. The system according to any one of claims 1 to 6, wherein the delivery system is for, when the collecting means (1115) collects pieces of information of the plurality of programs from the image forming apparatus (1101) after programs of the image forming apparatus are individually updated, and when the determination means determines that the information of the specific program of the pieces of the collected information of the plurality of programs match the configuration information of a firmware group (1021, 1022, 1023) registered in the saving means (1113) by the registration means (1112), delivering an update program for batch update processing to the image forming apparatus.

8. A delivery management method executed by a delivery server for managing delivery processing of a plurality of programs of an image forming apparatus (1101), comprising:
a collecting step (S1202) of collecting pieces of information of the plurality of programs from the image forming apparatus (1101);
a determination step (S1203) of determining whether or not the pieces of collected information of the plurality of programs match configuration information of any previously saved firmware group (1021, 1022) saved in a saving means (1113), which saving means (1113) is for saving configuration information of a plurality of programs, for which batch update processing is permitted in the image forming apparatus (1101), as a firmware group;
a specifying step (S1206, S1207, S1401-S1407) of specifying, when it is determined in the determination step that the pieces of collected information do not match the configuration information of the any previously saved firmware group (1021, 1022), a previously saved firmware group (1022) which includes information in its configuration information that matches information of a specific program of the pieces of collected information (1013) of the plurality of programs; and
a registration step (S1213; S1214) of registering, when the previously saved firmware group (1022) is specified in the specifying step, in the saving means (1113), the pieces of information (1013) of the plurality of programs collected in the collecting step as configuration information of a new firmware group.

9. The method according to claim 8, wherein the information of the specific program of the pieces of collected information (1013) of the plurality of programs comprises information on a version of a main controller of the image forming apparatus (1101).

10. A program which, when executed by a computer or processor in a delivery system, causes the delivery system to function as the delivery system according to any one of claims 1 to 7.

11. A program which, when executed by a computer, causes the computer to execute a method according to claim 8 or claim 9.

12. A storage medium storing a program according to claim 10 or claim 11.
